# EUROPEAN PATENT APPLICATION

(11) **EP 4 683 038 A1**
(43) Date of publication of application: **21.01.2026**
(21) Application number: 24849590.5
(22) Date of filing: 30.07.2024
(51) Int. Cl.: H01M 10/48, H01M 50/242, H01M 50/249, H01M 10/42, H01M 50/211

(54) **BATTERY MODULE INCLUDING CIRCUIT BOARD**

(30) Priority: 31.07.2023 KR 20230099966
(71) Applicant: LG Energy Solution, Ltd., Seoul 07335 (KR)
(72) Inventor: CHOI, Wansup, Daejeon 34122 (KR)
(74) Representative: BCKIP Part mbB
(86) International application number: PCT/KR2024/011186
(87) International publication number: WO 2025/029023

(57) **Abstract**

The present invention provides a structure of a battery module including a plurality of battery cells stacked in widthwise direction to form a cell laminate, wherein the cell laminate includes a circuit board, the circuit board including at least one of: a temperature sensor in contact with a surface of battery cell, and a surface pressure sensor measuring internal stress in widthwise direction of the cell laminate.

## Description

### [TECHNICAL FIELD]

This application claims the benefit of priority based on Korean Patent Application No. 1 0-2023-0099966 filed on July 31, 2023, entire content disclosed in the document of the patent applications is included as a part of this specification.

The present invention relates to a structure of a battery module including a circuit board capable of measuring voltage, temperature, pressure, etc. of a cell laminate in which a plurality of pouch-type battery cells are stacked.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

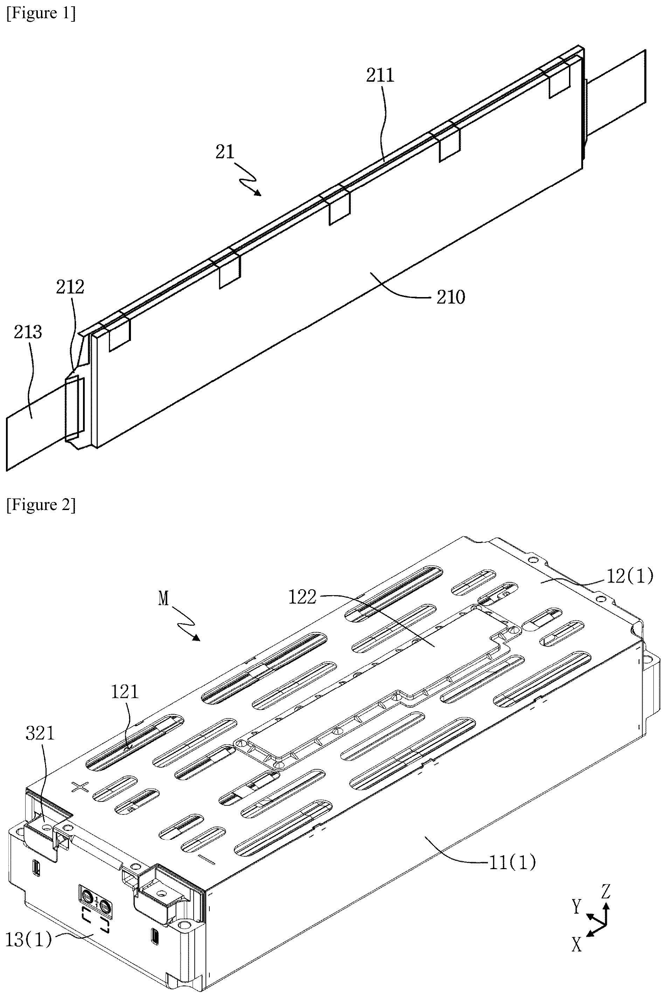

FIG. 1 illustrates a structure of a pouch-type battery cell. Referring to FIG. 1, the battery cell 21 is formed by folding metal material in half into a pouch 210 accommodating and sealing an electrode assembly. The pouch 210 is sealed on three sides except for the folded side, and the opposite side of the folded side is sealed and then folded and taped to form a sealed portion 211, and the two lengthwise ends of the pouch 210 constitute a terrace portion 212 through which electrode leads 213 protrude.

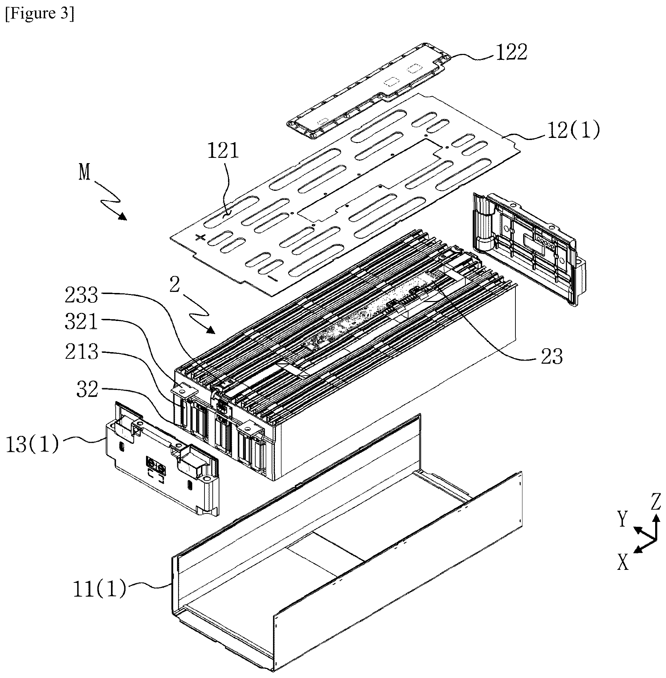

FIGS. 2 and 3 illustrate a structure of a general battery module including a circuit board. Referring to FIGS. 2 and 3, the battery cell 10 may be connected in series and/or in parallel to form a battery module M in order to increase capacity and/or voltage. The battery module includes a cell laminate 2 in which a plurality of battery cells 21 are stacked in widthwise direction, a bus bar assembly 3 connected to the electrode lead 213 at one lengthwise end of the cell laminate 2, and a housing 1 accommodating the cell laminate 2 and the bus bar assembly 3. The housing 1 generally includes a U frame 11, a top plate 12 and a pair of end plates.

Meanwhile, the battery cell 21 has a risk of overheating and ignition due to a short circuit, etc. When the battery cell 21 ignites, high-temperature gas and flame may be emitted from the battery cell 21. When such high-temperature gas and flame remain within the housing 1, ignition may spread to other battery cells, causing ignition in the module level. In addition, a plurality of battery modules M may be integrated facing each other in the front and rear to form a battery pack. When such high-temperature gas and flame are discharged in the front and rear directions of the battery module M, the ignition may spread to other battery modules M and cause ignition in the pack level.

In order to prevent such serial ignition, it is a recent trend to provide a venting hole 121 in the top plate 12 to discharge the gas and flame upward. By discharging the gas and flame upward, thermal propagation between cells and thermal propagation between modules may be prevented.

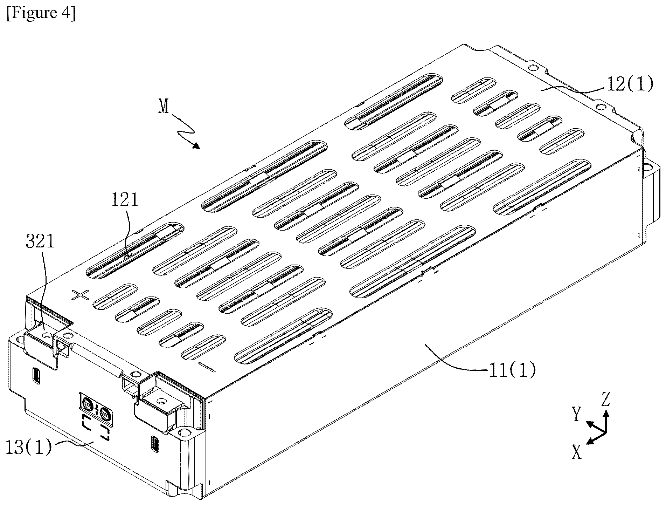

Referring back to FIGS. 3 and 4, the battery module M may include a circuit board 23 that measures the voltage of the cell laminate 2 by being connected to a bus bar 32 on the cell laminate 2. In such circuit board 23, it is common to connect a temperature sensor 233 that is in contact with the cell laminate 2 and measures the temperature of the cell laminate 2.

However, since the circuit board 23 is located on the upper surface of the cell laminate 2, the venting hole 121 may not be provided in the area where the circuit board 23 and the circuit board cover 122 are provided, and therefore, there is a problem that the venting of the widthwise center portion of the cell laminate 2 is not smooth. In addition, since the temperature sensor 233 may only be placed to be in contact with the sealed portion 211, there is also a problem that the temperature measured by the temperature sensor 233 is difficult to represent the exact internal temperature of the cell laminate 2.

In addition, in the battery cell 21, a swelling phenomenon may occur in which the electrolyte solution therein evaporates and is not discharged to the outside, causing the pouch 210 to swell. This may degrade the structural stability and energy density of the battery module M and may be a precursor symptom of ignition, which should also be prevented.

### [DETAILED DESCRIPTION OF THE INVENTION]

### [TECHNICAL PROBLEM]

In order to solve the problems of the above-described prior art, it is an object of the present invention to provide a structure of a battery module in which high-temperature gas and flame caused by ignition of a battery cell may be smoothly discharged upward.

It is another object of the present invention to provide a structure of a battery module in which gas and flame may be discharged through the entire upper surface of the battery module.

It is yet another object of the present invention to provide a structure of a battery module in which the lifespan, state, ignition risk, etc. may be monitored by including a circuit board capable of obtaining electrical information, information on temperature, internal stress, etc. of a cell laminate. In particular, it is yet another object of the present invention to provide a structure and arrangement of a sensor capable of accurately representing the measured temperature and internal stress of the cell laminate.

It is yet another object of the present invention to provide a structure of a battery module in which the degradation of structural stability due to tolerance and/or swelling is minimized.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery module including a plurality of battery cells stacked in widthwise direction to form a cell laminate, wherein the cell laminate includes a circuit board, the circuit board including at least one of: a temperature sensor in contact with a surface of battery cell, and a surface pressure sensor measuring internal stress in widthwise direction of the cell laminate.

The temperature sensor may include a thermistor. However, any temperature sensor may be selected as long as the sensor is capable of measuring the temperature of the battery cell while being in contact with a surface of the battery cell.

The temperature sensor may be provided at a planar center portion of the circuit board. That is, the planar center of the portion of the temperature sensor that is in contact with the battery cell may be located within a predetermined distance from the center of the widthwise end surface of the battery cell. It is preferable that the predetermined distance is equal to or shorter than or one third of the short side of the battery cell. Accordingly, the temperature measured by the temperature sensor may accurately represent the temperature of the cell laminate.

The circuit board may include a surface pressure sensor measuring the internal stress in widthwise direction of the cell laminate.

The surface pressure sensor may include a piezo sensor. However, any surface pressure sensor may be selected as long as the sensor is capable of measuring the internal stress in widthwise direction of the cell laminate while being disposed in the cell laminate.

The surface pressure sensor may be provided at a planar center portion of the circuit board. That is, the planar center of the surface pressure sensor may be located within a predetermined distance from the center of the widthwise end surface of the battery cell. It is preferable that the predetermined distance is shorter than one third of the short side of the battery cell. Accordingly, the pressure measured by the surface pressure sensor may accurately represent the internal temperature of the cell laminate.

The circuit board according to an embodiment of the present invention may include the temperature sensor and the surface pressure sensor, and the temperature sensor and the surface pressure sensor may be positioned in a manner that the centers of the sensor portions are located within a distance of less than one third of the short side of the battery cell from the planar center of the battery cell.

An even number of battery cells may be provided. Here, in the cell laminate, the number of the battery cells stacked at the two widthwise ends of the circuit board may be the same. In such case, the circuit board may be positioned at the widthwise center portion of the cell laminate, i.e. location that best represents the temperature and/or internal stress of the cell laminate.

Alternatively, an odd number of battery cells may be provided. Here, the circuit board may be stacked at one widthwise end of the battery cell located at the widthwise center of the cell laminate. In addition, the temperature sensor may be in contact with the surface of the battery cell at the other widthwise end surface of the circuit board. In such case, the circuit board may be positioned at the widthwise center of the cell laminate to directly measure the temperature of the battery cell that best represents the temperature of the cell laminate, and may be positioned close to the widthwise center of the cell laminate to best represent the internal stress of the cell laminate.

The cell laminate according to an embodiment of the present invention may include an even number of battery cells, and, here, the circuit board may be arranged in a manner that the same number of the battery cells are positioned at the two widthwise ends thereof.

The cell laminate may include a compressible pad containing a compressible material and stacked together with a battery cell. The compressible material is made of a material that may be compressed in the widthwise direction, and capable of absorbing the tolerance in the widthwise direction of the cell laminate or the swelling of the battery cell.

The compressible pad may be stacked at one widthwise end of the circuit board. Here, the temperature sensor may be in contact with a surface of the battery cell at the other widthwise end of the circuit board. Alternatively, a sensor hole opening a space between the temperature sensor and a battery cell may be provided in the compressible pad at a location corresponding to the temperature sensor, and the temperature sensor may protrude in widthwise direction to pass through the sensor hole, and to be in contact with a surface of battery cell at one widthwise end of the circuit board. That is, by providing the sensor hole, the temperature sensor may come into direct contact with the battery cell, regardless of which surface of the two widthwise end surfaces of the circuit board the compressible pad is stacked on.

According to an embodiment of the present invention, a predetermined first compressible pad may be stacked at one widthwise end of the circuit board, and a predetermined second compressible pad may be stacked at the other widthwise end of the circuit board. Here, a sensor hole opening a space between the temperature sensor and a battery cell may be provided in the first compressible pad at a location corresponding to the temperature sensor, and the temperature sensor may protrude in widthwise direction to pass through the sensor hole, and to be in contact with a surface of battery cell at one widthwise end of the circuit board.

According to an embodiment of the present invention, a structure of a battery module including the cell laminate is provided wherein the compressible pad is stacked at two widthwise ends of the circuit board such that the tolerance in widthwise direction and swelling are absorbed, while at the same time the temperature sensor may be in direct contact with the surface of the battery cell to accurately measure the temperature of the battery cell.

The present invention also provides a structure of a battery pack including the battery module and a vehicle including the battery pack.

A plurality of battery modules may be integrated to form a battery pack in order to increase the capacity and/or voltage. The battery pack may include a venting device capable of discharging gases and flames to the outside in upward direction when the battery module ignites. The battery pack may be built into a vehicle as a power source. The vehicle may include an electric vehicle, a hybrid vehicle, etc.

### [ADVANTAGEOUS EFFECTS]

The present invention may provide a structure of a battery module wherein high-temperature gas and flame caused by ignition of a battery cell may be smoothly discharged in upward direction from the entire upper surface of the cell laminate by completely opening the upper surface of the cell laminate.

The present invention also provides a structure of a battery module in which the lifespan, state, ignition risk, etc. may be monitored by including a circuit board connected to a bus bar, a temperature sensor, and/or a surface pressure sensor capable of obtaining electrical information, information on temperature, internal stress, etc. of a cell laminate, and capable of accurately representing the temperature and internal stress of the cell laminate by positioning the temperature sensor and the surface pressure sensor at the center portion of the cell laminate.

The present invention is yet advantageous in that a structure of a battery module is provided wherein the temperature sensor accurately measures the temperature of the battery cell while minimizing the degradation of structural stability due to tolerance and/or swelling by including a compressible pad.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIGS. 2 and 3 illustrate a structure of a general battery module including a circuit board.
FIGS. 4 and 5 illustrate a structure of a battery module according to an embodiment of the present invention.
FIGS. 6 and 7 illustrate a structure of a circuit board according to an embodiment of the present invention.
FIGS. 8 to 10 illustrate a structure of a circuit board with a compressible pad is stacked thereon according to an embodiment of the present invention.
FIGS. 11 and 12 illustrate a structure of a cell laminate according to an embodiment of the present invention.
FIG. 13 is an enlarged cross-sectional view illustrating an arrangement of a temperature sensor according to an embodiment of the present invention.
FIG. 14 is an enlarged cross-sectional view illustrating an arrangement of a surface pressure sensor according to an embodiment of the present invention.
FIGS. 15 and 16 illustrate a bus bar assembly coupled to a cell laminate according to an embodiment of the present invention.
FIGS. 17 and 18 illustrate a circuit board connected to a bus bar assembly according to an embodiment of the present invention.
FIG. 19 illustrates a structure of a cell laminate according to an embodiment of the present invention.
FIGS. 20 and 21 illustrate a structure of a battery pack including a battery module according to an embodiment of the present invention and a vehicle including the battery pack.

### [DESCRIPTION OF REFERENCE NUMERALS]

1: housing
   11: U frame
   12: top plate
      121: venting hole
      122: circuit board cover
   13: end plate
2: cell laminate
   21: battery cell
      210: pouch
      211: sealed portion
      212: terrace portion
      213: electrode lead
   22: compressible pad
      221: first compressible pad
         223: sensor hole
      222: second compressible pad
   23: circuit board
      230: circuit board portion
      231: first connecting part
      232: second connecting part
      233: temperature sensor
      234: surface pressure sensor
3: bus bar assembly
   31: bus bar frame
      311: slit
   32: bus bar
      321: terminal
M: battery module
P: battery pack
V: vehicle
X: lengthwise direction (front and rear directions)
Y: widthwise direction (left and right directions)
Z: heightwise direction (upward and downward directions)

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a battery module including a cell laminate manufactured by stacking a plurality of battery cells in widthwise direction, wherein the cell laminate includes a circuit board stacked together with the plurality of battery cells widthwise direction, and the circuit board includes at least one of: a temperature sensor in contact with a surface of the battery cell, and a surface pressure sensor measuring internal stress in widthwise direction of the cell laminate.

Hereinafter, a preferred embodiment of the present invention will be described with reference to the attached drawings.

### [THE STRUCTURE OF POUCH-TYPE BATTERY CELL]

Hereinafter, with reference to FIG. 1, a structure of a pouch-type battery cell included in a battery module according to an embodiment of the present invention will be described.

FIG. 1 illustrates a structure of a pouch-type battery cell. Referring to FIG. 1, the battery cell 21 may include an electrode assembly and a pouch 210 accommodating the electrode assembly.

The pouch 210 according to an embodiment of the present invention may enclose the electrode assembly by being sealed on three sides except for the folded side. Here, the pouch 210 may include a sealed portion 211 formed at an opposite end of the folded side and a terrace portion 212 provided at two lengthwise ends thereof.

The sealed portion 211 may be folded once or multiple times, and may be additionally sealed by adhering a tape.

The electrode assembly may include a pair of electrode leads 213 connecting the electrode assembly to the outside. The electrode leads 213 may protrude from two lengthwise ends of the electrode assembly. The electrode leads 213 may protrude outside the pouch 210 through the terrace portion 212.

### [BATTERY MODULE STRUCTURE]

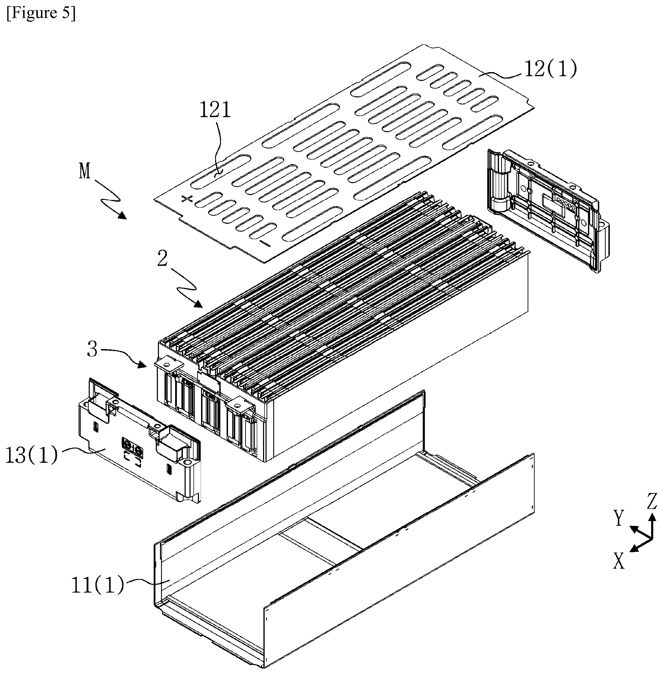

Hereinafter, with reference to FIGS. 4 and 5, a structure of a battery module according to an embodiment of the present invention will be described.

FIGS. 4 and 5 illustrate a structure of a battery module according to an embodiment of the present invention. Referring to FIGS. 4 and 5, a battery module M according to an embodiment of the present invention may include a cell laminate 2 in which a plurality of battery cells 21 are stacked in widthwise direction, a bus bar assembly 3 connected to one lengthwise end of the cell laminate 2, and a housing 1 accommodating the cell laminate 2 and the bus bar assembly 3.

The housing 1 according to an embodiment of the present invention may include a U frame 11 having open upper portion and open front and rear ends, a top plate 12 covering the open upper portion of the U frame 11, and a pair of end plates 13 covering the open front and rear ends of the U frame 11.

The top plate 12 may include a venting hole 121 in order to discharge high-temperature gas and flame upward when the battery cell 21 ignites. It is preferable that the venting hole 121 is distributed over the entire section of the top plate 12. In particular, as described below, according to an embodiment of the present invention, the venting hole 121 may also be provided along the widthwise center portion of the top plate 12.

### [STRUCTURE OF CIRCUIT BOARD AND CELL LAMINATE]

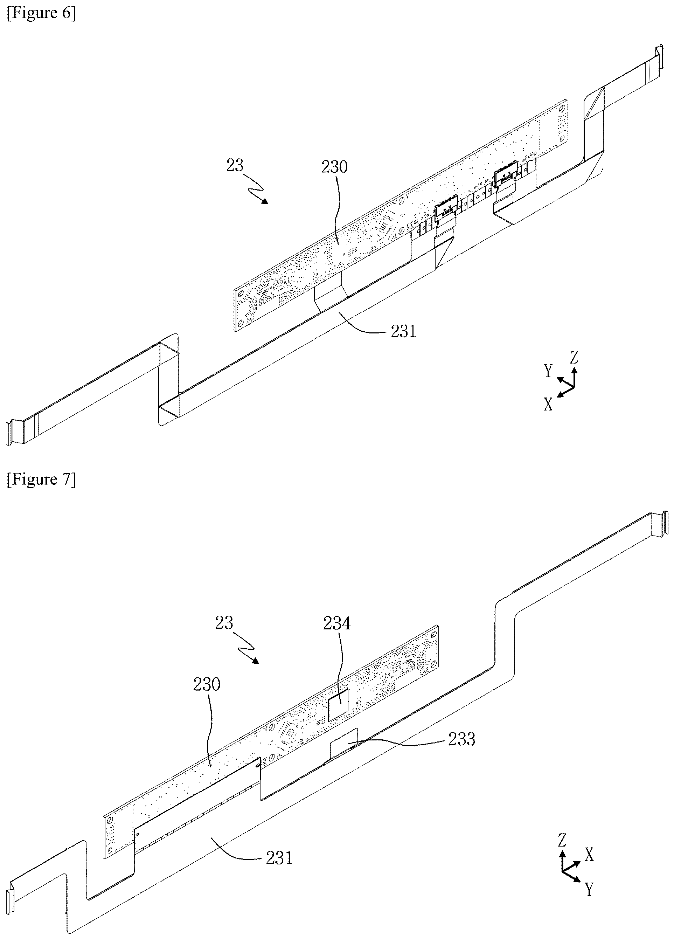

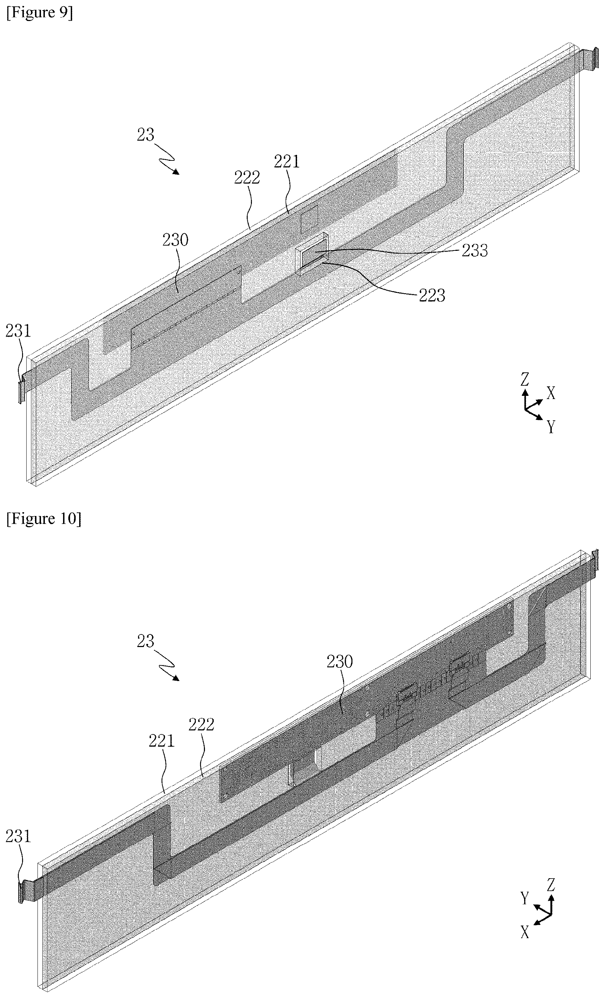

Hereinafter, structures of the circuit board and cell laminate according to an embodiment of the present invention will be described in detail with reference to FIGS. 6 to 19.

The cell laminate 2 may be manufactured by stacking a plurality of the battery cells 21 in widthwise direction. The cell laminate 2 may also include a circuit board 23 that is stacked in widthwise direction together with the battery cells 21.

FIGS. 6 and 7 illustrate a structure of a circuit board according to an embodiment of the present invention. Referring to FIGS. 6 and 7, the circuit board 23 may include a circuit board portion 230 and a first connecting part 231 connected to the circuit board portion 230.

The circuit board portion 230 may include a plurality of elements in order for the circuit board 23 to measure the voltage, current, current amount, charge amount, temperature, internal pressure, lifespan, etc. of the cell laminate 2 such that information may be stored, transmitted, and/or displayed.

The first connecting part 231 may connect the circuit board portion 230 to the cell laminate 2. The circuit board portion 230 may be capable of obtaining various information about the state of the cell laminate 2 through the first connecting part 231.

The circuit board 23 may include a temperature sensor 233. The temperature sensor 233 according to an embodiment of the present invention may be connected to the first connecting part 231. However, the location of the circuit board 23 to which the temperature sensor 233 is connected is not limited thereto.

It is preferable that the temperature sensor 233 be arranged to be in contact with the battery cell 21 so as to measure the temperature of the cell laminate 2. In order to achieve this, the temperature sensor 233 may have a shape that protrudes by a predetermined distance in the widthwise direction.

According to an embodiment of the present invention, the temperature sensor 233 may be arranged to be in contact with widthwise side surface of at least one of the battery cells 21, and preferably, provided at planar center portion of the widthwise side surface of at least one of the battery cells 21. That is, the planar center of the portion of the temperature sensor 233 that is in contact with the battery cell 21 may be located within a predetermined distance from the center of the widthwise end surface of the battery cell 21. It is preferable that the predetermined distance is equal to or shorter than or one third of the short side of the battery cell 21.

According to an embodiment of the present invention, the temperature sensor 233 may include a thermistor. The thermistor may be configured to detect change in the resistance thereof according to a temperature change of the cell laminate 2, and thus transmit information about the temperature of the cell laminate 2 to the circuit board portion 230. However, the temperature sensor 233 is not limited to the thermistor, and may be any sensor that can be configured to measure the temperature of the cell laminate 2 and transmit information on the temperature to the circuit board portion 230 regardless of the structure thereof.

The circuit board 23 may include a surface pressure sensor 234. According to an embodiment of the present invention, the surface pressure sensor 234 may be arranged on one widthwise end surface of the circuit board portion 230 and connected to the circuit board portion 230. However, the position of the surface pressure sensor 234 and the position at which the surface pressure sensor 234 is connected to the circuit board 23 are not limited thereto.

The surface pressure sensor 234 is preferably disposed inside the cell laminate 2 in widthwise direction so as to measure the stress in the widthwise direction of the cell laminate 2, that is, the pressure in the widthwise direction applied to the battery cells 21 included in the cell laminate 2. It is not necessary that the surface pressure sensor 234 and the battery cells 21 are in direct contact with each other. For example, according to an embodiment of the present invention, the surface pressure sensor 234 may be disposed inside the cell laminate 2 between the battery cells 21 with the circuit board portion 230 or the compressible pad described below interposed therebetween.

According to an embodiment of the present invention, the surface pressure sensor 234 may be preferably provided at the planar center portion of the widthwise end surface of the battery cell 21. That is, the planar center of the surface pressure sensor 234 may be located within a predetermined distance from the center of the widthwise end surface of the battery cell 21. It is preferable that the predetermined distance is shorter than one third of the short side of the battery cell 21.

According to an embodiment of the present invention, the surface pressure sensor 234 may include a piezo sensor. The piezo sensor may be configured to detect the change the potential difference between the two ends in the predetermined direction in response to the pressure in the predetermined direction, and thus transmit information about the internal stress in the widthwise direction of the cell laminate 2 to the circuit board portion 230. However, the surface pressure sensor 234 is not limited to the piezo sensor, and may be any sensor that ca be configured to measure the internal stress of the cell laminate 2 and transmit information to the circuit board portion 230 regardless of the structure.

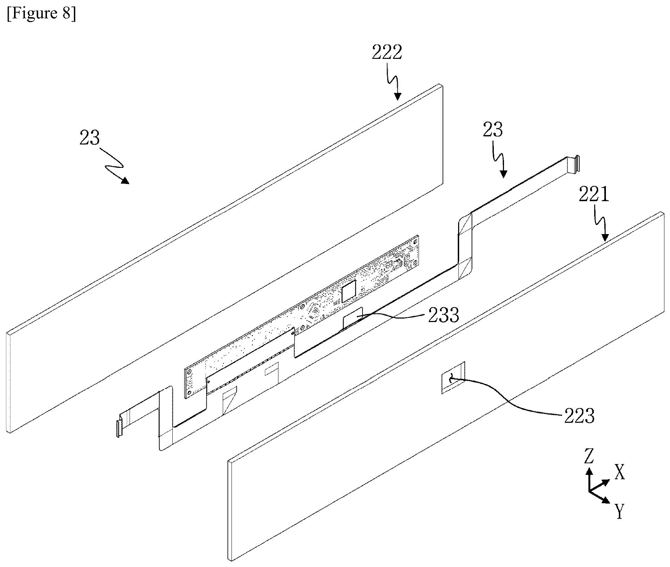

FIGS. 8 to 10 illustrate a structure of a circuit board with a compressible pad may be stacked thereon according to an embodiment of the present invention. Referring to FIGS. 8 to 10, the cell laminate 2 may include a compressible pad 22 stacked in widthwise direction together with the battery cell 21 and the circuit board 23.

The compressible pad 22 may be include a compressible material and may be capable of absorbing the tolerance in the widthwise direction of the cell laminate 2 or the swelling of the battery cell 21.

The compressible pad 22 may be stacked at one widthwise end or two widthwise ends of the circuit board 23.

The above compressible pad 22 may include a predetermined first compressible pad 221 stacked at one widthwise end of the circuit board 23. Here, the circuit board 23 may include the temperature sensor 233 protruding in the widthwise direction thereof, and the first compressible pad 221 may be provided with a sensor hole 223 opened such that the temperature sensor 233 may be in contact with the battery cell 21 at one widthwise end thereof. Alternatively, the circuit board 23 may include the temperature sensor 233 that is in contact with the battery cell 21 at the other widthwise end thereof.

The compressible pad 22 may include a predetermined second compressible pad 222 stacked at the other widthwise end of the circuit board 23.

According to an embodiment of the present invention, the circuit board 23 may include the temperature sensor 233 protruding in the widthwise direction thereof, and the compressible pad 22 may include the first compressible pad 221 stacked at one widthwise end of the circuit board 23, and the second compressible pad 222 stacked at the other widthwise end of the circuit board 23, and the sensor hole 223 may be provided in the first compressible pad 221 such that the temperature sensor 233 may be in contact with the battery cell 21 at one widthwise end thereof.

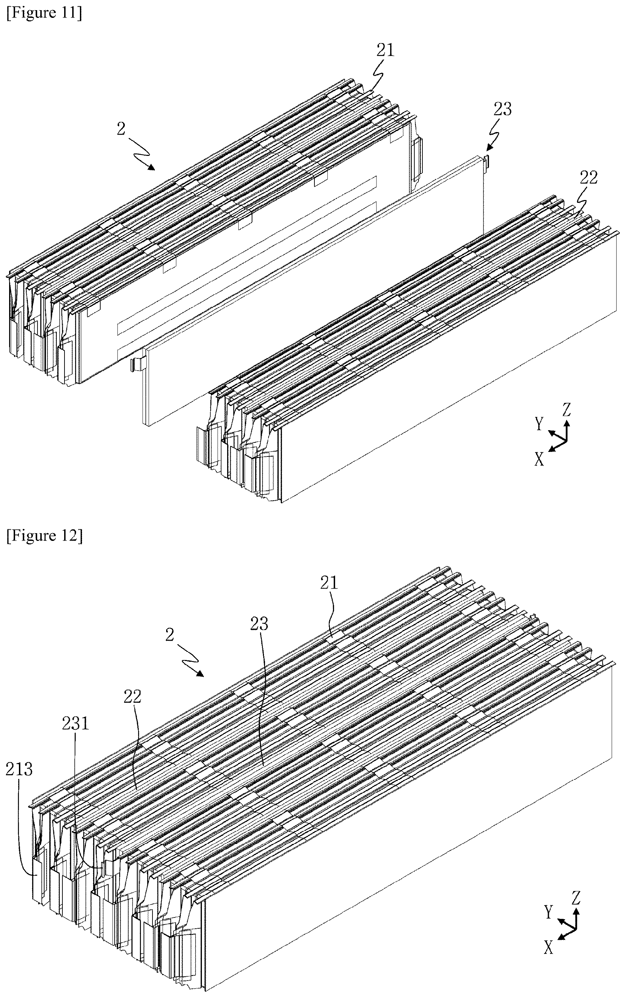

FIGS. 11 and 12 illustrate a structure of a cell laminate according to an embodiment of the present invention. Referring to FIGS. 11 and 12, the circuit board 23 may be stacked together with the battery cell 21 to form the cell laminate 2. Here, the compressible pad 22 may also be stacked together with the battery cell 21 to form the cell laminate 2.

The cell laminate 2 may be manufactured by stacking a plurality of cell banks with the compressible pad 22 interposed therebetween. The cell bank may be manufactured by stacking a plurality of battery cells 21.

The circuit board 23 may be stacked together with the battery cell 21 to constitute the cell laminate 2.

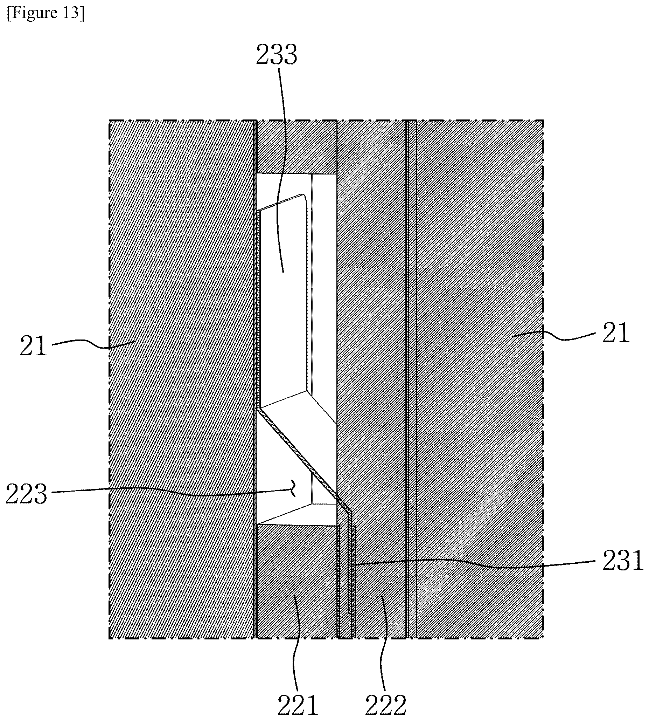

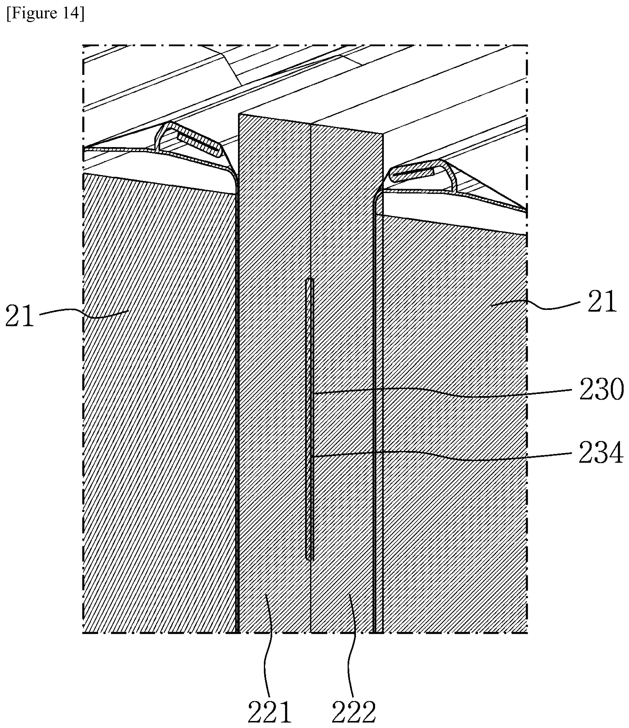

FIG. 13 is an enlarged cross-sectional view illustrating an arrangement of a temperature sensor according to an embodiment of the present invention, and FIG. 14 is an enlarged cross-sectional view illustrating an arrangement of a surface pressure sensor according to an embodiment of the present invention.

Referring to FIG. 13, the circuit board 23 according to an embodiment of the present invention may constitute an assembly in which the first compressible pad 221 is stacked at one widthwise end thereof and the second compressible pad 222 is stacked at the other widthwise end thereof, and the temperature sensor 233 may measure the temperature of the battery cell 21 by being in contact with the surface of the battery cell 21 stacked at one widthwise end of the circuit board 23 through the sensor hole 223 provided in the first compressible pad 221. It is preferable that the degree of protrusion of the temperature sensor 233 in the widthwise direction is greater than the thickness of the first compressible pad 221. In such case, the temperature sensor 233 may be elastically deformed toward the other widthwise end as the first compressible pad 221 comes into close contact with the battery cell 21, and thus may be subjected to elastic restoring force toward one widthwise end, thereby allowing closer contact with the battery cell 21.

In addition, referring to FIG. 14, the surface pressure sensor 234 may be interposed between the first compressible pad 221 and the second compressible pad 222 to measure the internal stress in the widthwise direction. Since the internal stress of the cell laminate 2 is constant along the widthwise direction, the position of the surface pressure sensor 234 is irrelevant as long as the surface pressure sensor 234 is inside the cell laminate 2 in the widthwise direction.

Referring back to FIGS. 11 and 12, the cell laminate 2 may include an even number of battery cells 21. Here, it is preferable that the number of the battery cells 21 stacked at the two widthwise ends of the circuit board 23 is the same. That is, the circuit board 23 may be interposed between two sets of the battery cells 21 having the same number. In such case, the circuit board 23 is positioned at the widthwise center portion of the cell laminate 2 such that the temperature and/or pressure measured by the temperature sensor 233 and/or the surface pressure sensor 234 may more accurately represent the temperature and/or internal stress of the cell laminate 2.

Alternatively, the cell laminate 2 may include an odd number of battery cells 21. Here, the circuit board may be provided at one widthwise end of the battery cell 21 located at the widthwise center of the cell laminate 2, and the temperature sensor 233 may be in contact with the battery cell 21 at the other widthwise end surface of the circuit board 23. In such case, the temperature sensor 233 may measure the temperature of the battery cell 21 closest to the widthwise center of the cell laminate 2.

According to an embodiment of the present invention, an assembly including the circuit board 23 and the first compressible pad 221 and the second compressible pad 222 stacked at the two widthwise ends thereof may be stacked together with the battery cell 21 while having the same number of the battery cells 21 at the two widthwise ends.

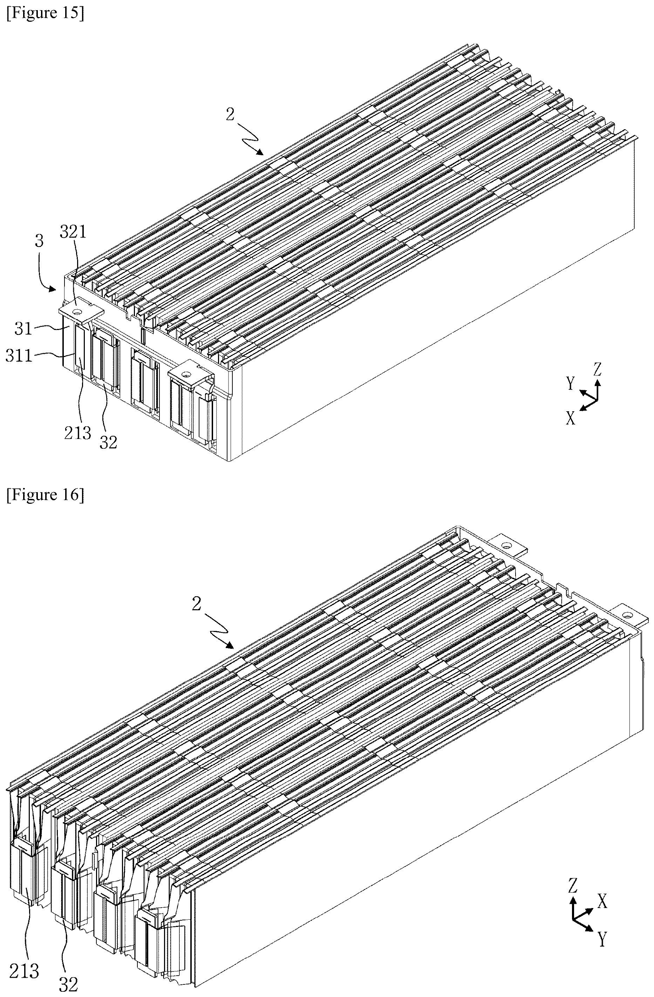

FIGS. 15 and 16 illustrate a bus bar assembly coupled to a cell laminate according to an embodiment of the present invention. Referring to FIGS. 15 and 16, the bus bar assembly 3 may be connected to one lengthwise end of the cell laminate 2. The bus bar assembly 3 may include a bus bar frame 31 covering a front surface of the cell laminate 2 and a bus bar 32 to which the electrode lead 213 is connected.

The bus bar frame 31 may include a slit 311 through which the electrode lead 213 passes in lengthwise direction. At one lengthwise end of the cell laminate 2, the electrode lead 213 may pass through the slit 311 and be connected to the bus bar 32.

The bus bar 32 may be provided on the front surface of the bus bar frame 31. The bus bar 32 may include an element that is not included in the bus bar assembly 3, and may also be provided at the other lengthwise end of the cell laminate 2. The bus bar 32 may be electrically connected to the electrode lead 213 to connect the battery cells 21 to each other in series or in parallel.

A pair of terminals 321 may be provided at at least one of the bus bars 32 to electrically connect the cell laminate 2 to the outside. Referring back to FIGS. 4 and 5, the terminals 321 may be exposed to the outside through terminal exposing ports provided at the end plate 13. Since the battery module M may be connected to other battery modules in series or in parallel through the terminals 321 to constitute a battery pack, it is important that high-temperature gas and flame caused by ignition of the battery cell 21 are not discharged to the front of the battery module M. As in an embodiment of the present invention, since the circuit board 23 is provided in the cell laminate 2, the venting hole 121 may be provided in the entire area of the top plate 12 such that the gas and flame from the battery cell 21 may be discharged upward more smoothly, and the gas and flame discharged forward may be reduced.

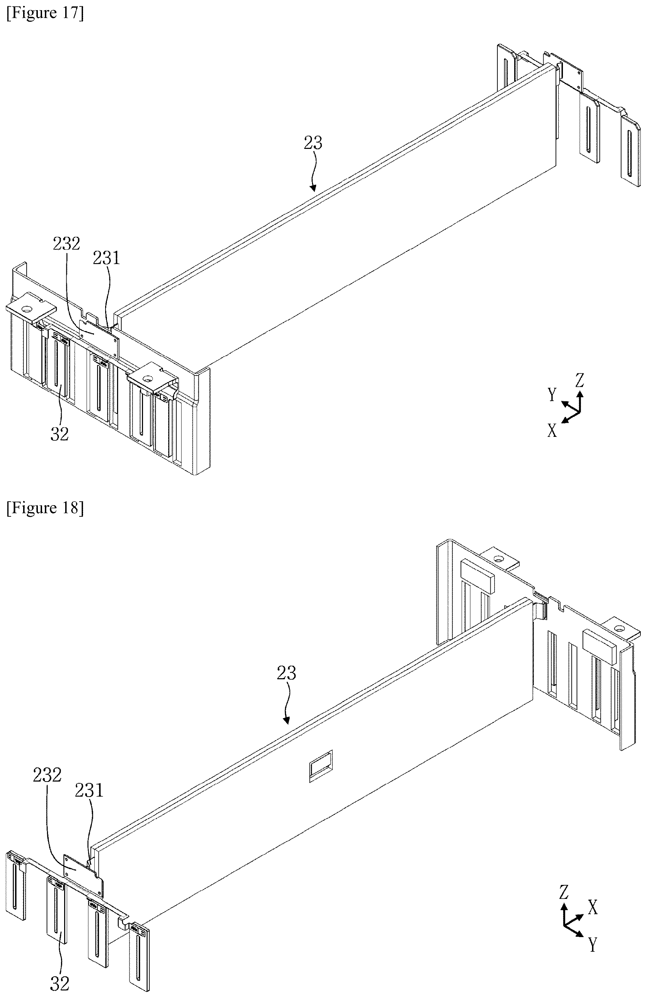

FIGS. 17 and 18 illustrate a circuit board connected to a bus bar assembly according to an embodiment of the present invention. Referring to FIGS. 17 and 18, the circuit board 23 may include a second connecting part 232 connected to the first connecting part 231 and the bus bar 32. The second connecting part 232 according to an embodiment of the present invention may be fixed to the bus bar frame 31. However, the second connecting part 232 only needs to connect the first connecting part 231 and the bus bar 32, and the structure thereof or the position thereof is not important. Through the first connecting part 231 and the second connecting part 232, the circuit board portion 230 may be connected to the bus bar 32, and information related to the electrical characteristics of the cell laminate 2 may be obtained.

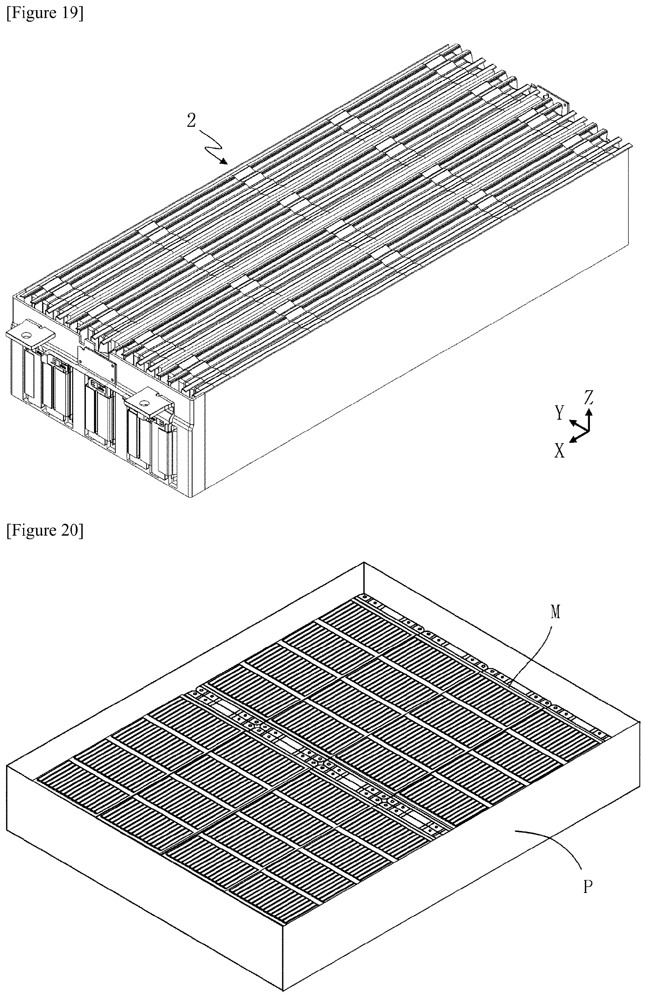

FIG. 19 illustrates a structure of a cell laminate according to an embodiment of the present invention. Referring to FIG. 19, the cell laminate 2 according to an embodiment of the present invention may be manufactured by stacking the battery cell 21, the compressible pad 22, and the circuit board 23 in widthwise direction, and the bus bar assembly 3 may be connected to one lengthwise end thereof. The circuit board 23 is provided at the widthwise center portion of the cell laminate 2, and includes the temperature sensor 233 and/or the surface pressure sensor 234, and is capable of measuring the temperature and the internal stress in the widthwise direction of the cell laminate 2. In addition, the circuit board 23 is connected to the bus bar 32 which is connected to the electrode lead 213 through the first connecting part 231 and the second connecting part 232, thereby obtaining electrical information about the cell laminate 2. Here, since the circuit board 23 does not cover the upper surface of the cell laminate 2, the discharge of gas and flame in upward direction may be facilitated at any point on the plane of the cell laminate 2.

### [BATTERY PACK AND VEHICLE]

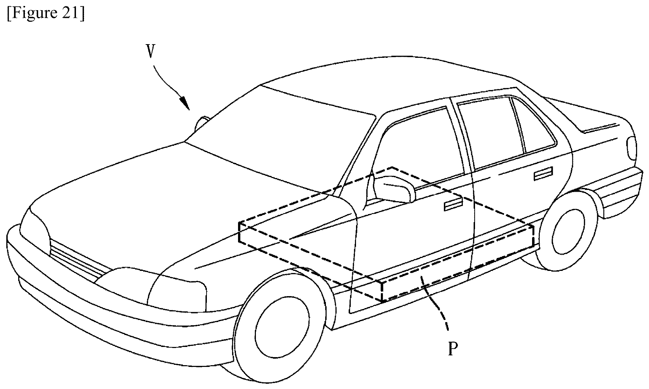

Hereinafter, with reference to FIGS. 20 and 21, a structure of a battery pack and a vehicle according to an embodiment of the present invention will be described.

FIGS. 20 and 21 illustrate a structure of a battery pack including a battery module according to an embodiment of the present invention and a vehicle including the battery pack. Referring to FIGS. 20 and 21, a plurality of battery modules M may be integrated to form a battery pack P in order to increase the capacity and/or voltage. The battery pack P may include a venting device capable of discharging gases and flames to the outside in upward direction when the battery module M ignites. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising a cell laminate manufactured by stacking a circuit board and a plurality of battery cells in widthwise direction,
wherein the circuit board comprises a temperature sensor in contact with a surface of the battery cell, and
the circuit board is arranged to be in contact with a battery cell located at a widthwise center of the cell laminate, or to be located at a widthwise center of the cell laminate.

2. The battery module of claim 1, wherein the temperature sensor comprises a thermistor.

3. The battery module of claim 1, wherein the temperature sensor is provided at a planar center portion of the circuit board.

4. The battery module of claim 1, wherein an even number of battery cells are provided, and
same number of battery cells are stacked at two widthwise ends of the circuit board in the cell laminate,.

5. The battery module of claim 1, wherein an odd number of battery cells are provided,
the circuit board is stacked at one widthwise end of a battery cell located at widthwise center of the cell laminate, and
the temperature sensor is in contact with a surface of a battery cell at other widthwise end surface of the circuit board.

6. The battery module of claim 1, wherein the cell laminate comprises a compressible pad containing a compressible material and stacked together with a battery cell.

7. The battery module of claim 6, wherein the compressible pad is stacked at one widthwise end of the circuit board, and
the temperature sensor is in contact with a surface of the battery cell at other widthwise end of the circuit board.

8. The battery module of claim 6, wherein the compressible pad is stacked at one widthwise end of the circuit board,
a sensor hole opening a space between the temperature sensor and a battery cell is provided in the compressible pad at a location corresponding to the temperature sensor, and
the temperature sensor protrudes in widthwise direction to pass through the sensor hole, and to be in contact with a surface of battery cell at one widthwise end of the circuit board.

9. The battery module of claim 6, wherein a predetermined first compressible pad is stacked at one widthwise end of the circuit board,
a predetermined second compressible pad is stacked at other widthwise end of the circuit board,
a sensor hole opening a space between the temperature sensor and a battery cell is provided in the first compressible pad at a location corresponding to the temperature sensor, and
the temperature sensor protrudes in widthwise direction to pass through the sensor hole, and to be in contact with a surface of battery cell at one widthwise end of the circuit board.

10. The battery module of claim 1, wherein the circuit board comprises a surface pressure sensor measuring internal stress in widthwise direction of the cell laminate.

11. The battery module of claim 10, wherein the surface pressure sensor comprises a piezo sensor.

12. The battery module of claim 10, wherein the surface pressure sensor is provided at a planar center portion of the circuit board.

13. A battery module comprising a circuit board, a compressible pad, and a cell laminate manufactured by stacking a plurality of battery cells in widthwise direction,
wherein the circuit board comprises a temperature sensor in contact with a surface of battery cell, and
the compressible pad is provided with a sensor hole where the temperature sensor passes through to be in contact with battery cell.

14. The battery module of claim 13, wherein the temperature sensor comprises a thermistor.

15. The battery module of claim 13, wherein the temperature sensor is provided at a planar center portion of the circuit board.

16. The battery module of claim 13, wherein an even number of battery cells are provided, and
same number of battery cells are stacked at two widthwise ends of the circuit board in the cell laminate,.

17. The battery module of claim 13, wherein an odd number of battery cells are provided,
the circuit board is stacked at one widthwise end of a battery cell located at widthwise center of the cell laminate, and
the temperature sensor is in contact with a surface of a battery cell at other widthwise end surface of the circuit board.

18. The battery module of claim 13, wherein the compressible pad is stacked at one widthwise end of the circuit board, and
the temperature sensor is in contact with a surface of the battery cell at other widthwise end of the circuit board.

19. The battery module of claim 13, wherein the compressible pad is stacked at one widthwise end of the circuit board, and
the temperature sensor protrudes in widthwise direction to pass through the sensor hole, and to be in contact with a surface of battery cell at one widthwise end of the circuit board.

20. The battery module of claim 13, wherein the compressible pad comprises: a first compressible pad provided on one widthwise end of the circuit board; and a second compressible pad provided at the other widthwise end of the circuit board,
the sensor hole is provided at the first compressible pad, and
the temperature sensor protrudes in widthwise direction to pass through the sensor hole, and to be in contact with a surface of battery cell at one widthwise end of the circuit board.

21. The battery module of claim 13, wherein the circuit board comprises a surface pressure sensor measuring internal stress in widthwise direction of the cell laminate.
